# EUROPÄISCHE PATENTANMELDUNG

(11) **EP 3 626 907 A1**
(43) Veröffentlichungstag der Anmeldung: **25.03.2020**
(21) Anmeldenummer: 19198071.3
(22) Anmeldetag: 18.09.2019
(51) Int. Cl.: E04F 11/18, E04G 1/06, F16B 7/04, F16B 7/18

(54) **VERBINDUNGSSYSTEM ZUM VERBINDEN ZWEIER ROHRENDEN AUS STAHL**

(30) Priorität: 18.09.2018 DE 102018007490
(71) Anmelder: Saage Treppenbau und Biegetechnik GmbH & Co. KG, 41334 Nettetal (DE)
(72) Erfinder: SAAGE, Detlev, 41334 Nettetal (DE); VYSKOCIL, Volker, 41334 Nettetal (DE)
(74) Vertreter: Tilmann, Max Wilhelm

(57) **Zusammenfassung**

Die Erfindung betrifft ein Verbindungssystem für Rohre, wobei zwei in einem geeigneten Winkel zueinander geschnittene Rohrenden, die durch in den Rohrenden verschweißte Platten, die zum einem ein Gewindeloch und zum anderen ein dazu korrespondierendes Durchgangsloch aufweisen, miteinander verschraubt werden.

## Beschreibung

Die Erfindung betrifft ein Verbindungssystem zum Verbinden zweier Rohrenden aus Stahl.

Im Treppenbau ist es oft erforderlich, zwei Stahlhohlprofile, wie sie z.B. für Treppenhandläufe verwendet werden, unter einem definierten Winkel miteinander zu verbinden. Diese Verbindungen müssen meist ästhetischen Aspekten genügen, die geforderte Festigkeit aufweisen und in der Anwendung praktikabel sein.

Ein bekanntes Verbindungssystem stellt die Schweißverbindung dar. Bei fachgerechter Ausführung weist diese eine hohe Festigkeit auf. Der Arbeitsaufwand zur Herstellung einer solchen Verbindung ist jedoch hoch und eine solche Schweißung darf in der Regel nur von auf das Schweißen geschultem Personen durchgeführt werden. Meist ist aus Gründen der Optik eine Nacharbeit der Schweißnaht und der durch den Wärmeeintrag beeinflussten Bauteilzonen erforderlich, was den Arbeitsaufwand noch zusätzlich erhöht.

Denkbar wäre auch eine Eckverbindung in Form einer Flanschverbindung, wie sie z.B. im Stahlbau und Rohrleitungsbau eingesetzt wird. Solch eine Verbindung stellt jedoch eine Art Unterbrechung eines Handlaufs dar. Dies sowohl haptisch als auch optisch.

Aus DE 29 909 169, DE 102 31 250 sind Systeme bekannt, die darauf beruhen, mit Hilfe von Klemmkörpern, eine Verbindung von Rohrende und Kupplungselemt herzustellen. Winklig zueinander auszuführende Verbindungen können dabei durch zwei Halbkugelsegmente, die unter einem Winkel von 45 Grad zu den jeweiligen Rohrachsen angeordnet sind und als Kupplungsglied dienen, hergestellt werden. Nachteilig bei diesen Systemen ist die geringe Festigkeit in Bezug auf das Herausziehen der Klemmkörper aus dem Rohrende sowie das Unvermögen, Drehmomente zu übertragen. Letztere können dann in Geländern auftreten, wenn diese als tragendes Element ausgebildet sind, wie dies z.B. bei abgehängten Treppen der Fall ist, bei denen die Trittlast, die auf die Treppenstufen einwirkt, über die Geländerstäbe auf den Handlauf übertragen werden. Des Weiteren kann der als Kupplungsteil dienende, sichtbare Bereich dieser Systeme als störend empfunden werden.

Aus DE 693 02 482 ist ein System bekannt, dass durch eine Formschlüssige Verbindung von Kupplungsglied und Rohrende dem herausziehen aus dem Rohrende einen höheren Widerstand entgegensetzen kann, als die zuvor genannten Systeme mit Klemmkörper. Torsionsmomente kann dieses System nur sehr eingeschränkt übertragen.

Aus DE 43 08 967 ist ein System bekannt, dass eine Bogensegment aufweist, das durch jeweils eine zentrale Schraube an die zu verbindenden Rohre angeschraubt wird. Auch diese Variante kann in der gezeigten Ausführung nur begrenzt Drehmomente übertragen. Das Sichtbare Bogensegment könnte als störend empfunden werden.

Ausgehend von diesem Stand der Technik lag der Erfindung die Aufgabe zugrunde ein Verbindungssystem anzugeben, mit dem zwei Rohrenden verbunden werden können, die unter einem beliebigen Winkel zueinander stehen. Aus ästhetischen Gründen soll kein Teil des Verbindungssystems im montierten Zustand sichtbar sein. Es sollen möglichst große Kräfte in Richtung Rohrachse sowie Drehmomente um die Rohrachse übertragen werden können. Die Montage der Rohre soll keine besondere Schulung der Monteure erforderlich machen.

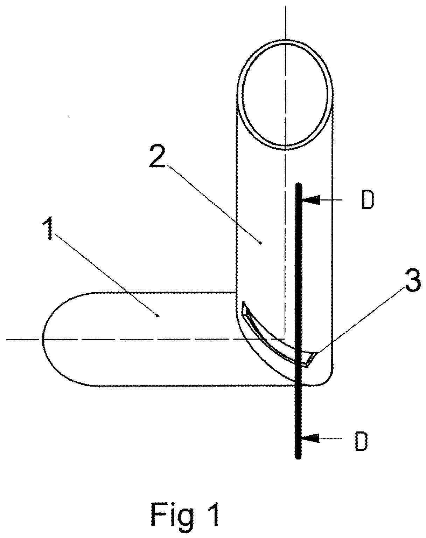

Grundidee der Erfindung ist, die zu verbindenden Rohrenden, die vorzugsweise einen runden, ovalen, quadratischen oder rechteckigen Querschnitt aufweisen, mit einem solchen Winkel zur Längsachse zu schneiden, der zum einen die geforderte Lage der Rohre zueinander sicherstellt und zum anderen einen nahtlosen Übergang der beiden Rohrwandungen an der Verbindungsstelle ergibt (siehe Fig.1).

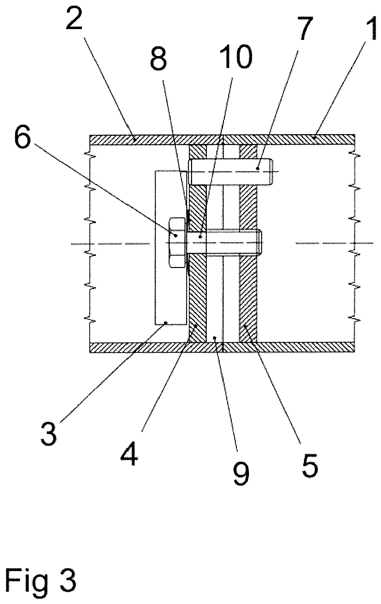

In die Rohrenden (siehe Fig.3) werden Platten 4; 5 eingeschweißt. Diese liegen parallel und um einen gewissen Betrag 5 zurück versetzt zu den Schnittkanten der Rohrenden. Durch das Zurückversetzen der Platten kann die Schweißung so ausgeführt werden, dass keine Nacharbeit der Schweißnaht erforderlich ist.

Beide Platten (siehe Fig.3) können mit Hilfe mindestens einer Schraube 6 miteinander verbunden werden.

Die Lage der Platten (siehe Fig.3) zueinander, wird durch mindestens einen Stift 7, der in einer der beiden Platten befestigt ist, und einer dazu korrespondierenden Bohrung in der anderen Platte, sichergestellt. Durch diese Anordnung wird auch sichergestellt, dass zu übertragende Drehmomente nicht dazu führen, dass die Verschraubung gelockert wird.

Durch einen (siehe Fig.1 und Fig.3) Fensterausschnitt 3 in einem der zu verbindenden Rohre kann ein Ringratschenschlüssel oder ein Maulratschenschlüssel geführt und somit die Verbindungsschraube angezogen werden.

Der Fensterausschnitt kann nach erfolgter Montage durch eine Blende verschlossen werden.

Eine Ausführungsform der Erfindung besteht darin (siehe Fig.3), die Befestigungsschrauben 6 mit einem Ansatz 10 zu versehen sowie die Platte, die eigentlich die Durchgangslöcher für diese Schraube aufweist, mit entsprechenden Gewinden zu versehen, so, dass, wenn die Schrauben bis zum Ansatz in diese Platte eingeschraubt werden, diese nicht mehr verloren gehen können.

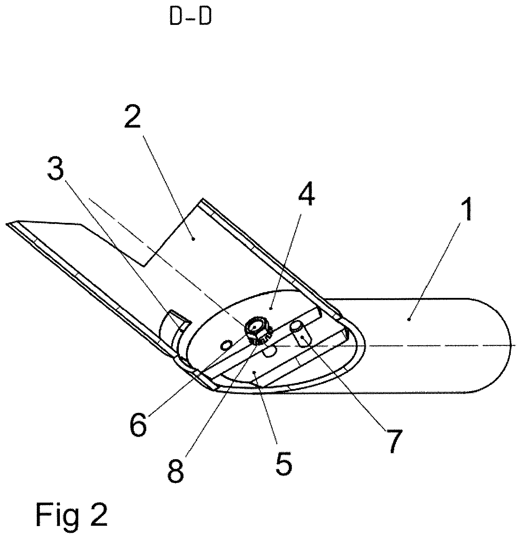

Eine weitere Ausführungsform (siehe Fig.2 und Fig.3) der Erfindung besteht darin, dass unter die Befestigungsschraube 6 ein Federelement 8 gelegt wird, bevor diese bis zum Ansatz in die erste Platte geschraubt werden. Dies führt dazu, dass die Schraube nur unter Aufbringung eines Mindestdrehmoments zu bewegen ist, was die Montage mit Ringratschenschlüsseln erleichtert.

Eine andere Ausführungsform der Erfindung besteht darin, eine der Platten mit einer Art Schlüsselloch zu versehen in der Form, dass bei der Montage der Schraubenkopf der Befestigungsschraube durch dieses Schlüsselloch geführt werden kann, um dadurch den Montagevorgang zu beschleunigen.

## Patentansprüche

1. Verbindungssystem für Rohre (1; 2), **gekennzeichnet durch** zwei in einem geeigneten Winkel zueinander geschnittene Rohrenden, die durch in den Rohrenden verschweißte Platten (4; 5), die zum einen ein Gewindeloch und zum anderen ein dazu korrespondierendes Durchgangsloch aufweisen, miteinander verschraubt werden.

2. Verbindungssystem für Rohre (1; 2) nach Anspruch 1, **dadurch gekennzeichnet, dass** eines der Rohre mit einem Fensterausschnitt (3) versehen ist.

3. Verbindungssystem für Rohre (1; 2) nach einem der vorigen Ansprüche, **dadurch gekennzeichnet, dass** die Platten um einen, parallel zur Schnittkante verlaufenden Betrag, zurück versetzt eingeschweißt werden (9).

4. Verbindungssystem für Rohre (1; 2) nach einem der vorigen Ansprüche, **dadurch gekennzeichnet, dass** in eine der Platten mindestens ein Stift (7) befestigt wird und korrespondierend dazu die andere Platte mit einer Bohrung versehen wird.

5. Verbindungssystem für Rohre (1; 2) nach einem der vorigen Ansprüche, **dadurch gekennzeichnet, dass** beide Platten (4; 5) mit Gewinden versehen sind und das die zum Verbinden der Platten eingesetzten Schrauben einen Ansatz (10) aufweisen.

6. Verbindungssystem für Rohre nach einem der vorigen Ansprüche, **dadurch gekennzeichnet, dass** die Schraube mit einem unterlegten Federelement (8) in die erste Platte (4) eingeschraubt wird.

7. Verbindungssystem für Rohre nach einem der vorigen Ansprüche, **dadurch gekennzeichnet, dass** eine der beiden Scheiben mit schlüssellochähnlichen Durchgangslöchern für die Schraubenköpfe der Befestigungsschrauben versehen ist.
